Europäisches Patentamt

European Patent Office

Office européen des brevets

(11) Publication number: **0 218 466**
**B1**

# EUROPEAN PATENT SPECIFICATION

(45) Date of publication of patent specification: **06.02.91**

(51) Int. Cl.⁵: **G 01 G 19/12**

(21) Application number: **86307563.6**

(22) Date of filing: **01.10.86**

(54) Vehicle load monitoring system.

(30) Priority: **01.10.85 GB 8524104**

(43) Date of publication of application:
**15.04.87 Bulletin 87/16**

(45) Publication of the grant of the patent:
**06.02.91 Bulletin 91/06**

(84) Designated Contracting States:
**AT BE CH DE ES FR GB GR IT LI LU NL SE**

(56) References cited:
**EP-A-0 082 662**
**GB-A-2 043 921**
**GB-A-2 053 495**
**GB-A-2 062 876**
**US-A-3 800 895**
**US-A-3 854 540**

**AUTOMATIVE ENGINEERING, vol. 85, no. 1,
January 1977, page 37, New York, US; "Truck
load indicator has digital readout"**

(73) Proprietor: **Manterfield, Kenneth Charles
c/o Hodgson Impey 5 Portland Terrace
GB-Newcastle Upon Tyne (GB)**

(72) Inventor: **Monkhouse, Bryan Ashford
33 Willowtree Avenue
Durham City (GB)**

(74) Representative: **Brown, Kenneth Richard et al
R.G.C. Jenkins & Co. 26 Caxton Street
London SW1H 0RJ (GB)**

Courier Press, Leamington Spa, England.

## Description

This invention relates to a system for monitoring the load on a road vehicle.

Commercial road vehicles are usually required by law to operate within legally defined limits for axle weights and gross vehicle weights, and the penalties for exceeding these limits can be severe.

Conventionally, to determine with the required degree of accuracy the magnitudes of these critical parameters the vehicle operator or driver has had to drive the vehicle to a known kind of fixed weighbridge. However, the checking of a loaded vehicle using such equipment is both inconvenient and time-consuming, and furthermore involves the risk of the vehicle being driven on public roads in an overloaded condition. To avoid the need to use a weighbridge and yet avoid the risk of prosecution, operators and drivers tend to underload their vehicles, but this leads to inefficient and uneconomical use of a vehicle's load-carrying capacity.

There is therefore a need for a load monitoring system which can be installed on a commercial vehicle to provide the operator or driver with an immediate indication of such parameters as the axle weights and gross vehicle weights of his vehicle at any time during use, e.g. during loading and unloading of the vehicle.

An on-board monitoring system has been proposed, e.g. in "Automotive Engineering", vol. 85, no. 1, January 1977, page 37, this system comprising a number of magneto-elastic transducers welded to load-bearing chassis members and an electronic control unit which receives the transducer outputs and computes the parameters of gross weight and axle loads for display on a digital display.

However, certain inaccuracies will arise using such a known form of on-board system. In particular, the effects upon axle weight of a given load will vary according to the inclination of the vehicle, and a load giving acceptable readings upon loading the vehicle on sloping ground may well produce illegal load conditions on the flat, and especially on a horizontal fixed weighbridge. Thus, even if an on-board load monitoring system is provided, if the calculations made automatically for determining axle and gross vehicle weights using strain sensor outputs assume incorrectly that the vehicle is on level ground, a problem arises when the vehicle actually does move onto level ground and the load distribution between the vehicle's axles changes.

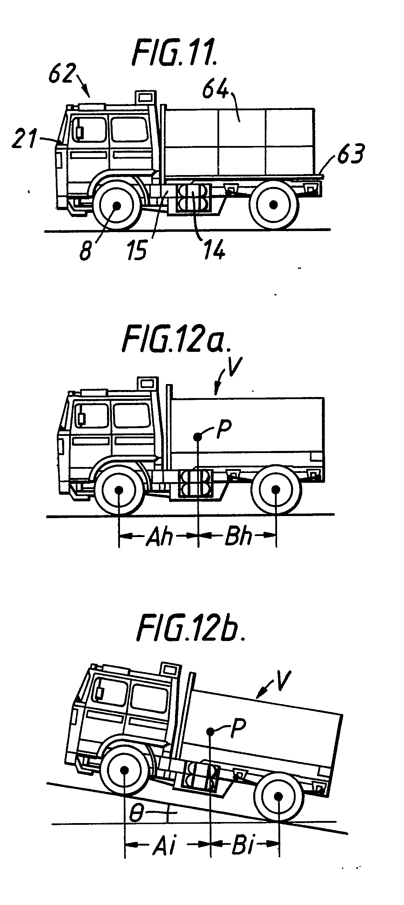

An illustration of this problem is shown in Figures 12a and 12b of the accompanying drawings, which show a two-axled commercial vehicle V on a horizontal surface and on a slope at an angle O to the horizontal, respectively. The centre of gravity of the vehicle is at a point P, and it will be seen that the ratio of the distances, measured horizontally between the centre of gravity and the front and rear axles changes from $A_L$—$B_L$ for the horizontal condition to Ai—Bi for the inclined condition. Accordingly, the ratio of the front to rear axle weights will also change. Thus the measurement of axle weight on a slope is not valid for the horizontal vehicle position, which is the position in which the vehicle load parameters would be checked on a weighbridge. Overloading could thus occur if a vehicle is loaded up to a given axle weight measured on a slope, and then driven onto a horizontal surface.

The present invention is directed in its main aspect to this problem, and provides a load monitoring system for a road vehicle comprising at least one load sensor for mounting on the vehicle for providing a sensor output which varies in accordance with the load carried by the vehicle, a computing apparatus which is operable to process the or each output from said at least one load sensor and to provide a computer output indicative of a load parameter of the vehicle, and visual display means for producing a visual representation of the computer output, characterised in that there is also provided an inclination sensor for mounting on the vehicle for providing a sensor output indicative of the inclination of the vehicle to a datum, e.g. the horizontal, said computing apparatus being operable to process the sensor outputs both from said load and inclination sensors so that said computer output is representative of the value which said load parameter of the vehicle would assume when said inclination to said datum is zero.

With this arrangement, the vehicle operator can always be presented with the correct value of the load parameter, compensated for the deviation of the vehicle's current inclination from the datum (horizontal), and can therefore always maintain the compliance of the vehicle with legal load requirements.

The inclination sensor is preferably an inclinometer having a casing, a pendulum member suspended within said casing, and means which provides a signal which varies in accordance with the angular relationship between the casing and the pendulum. Such inclinometers are commercially available.

In another aspect, the present invention is concerned with the problems of providing an indication of the vehicle load with compensation being made for the amount of fuel carried in the vehicle's fuel tanks.

It will be appreciated that in commercial vehicles the large capacity of the fuel tank or tanks can lead to the problem that even with an accurate on-board load monitoring system, if the vehicle is loaded up to or close to the legal limit with the fuel tank or tanks substantially less than full, subsequent refuelling can very easily increase the total load over the limit.

A further aspect of the invention is directed to this problem. In accordance with this further aspect, the computing apparatus is operable to process the or each output from said at least one load sensor and to provide a computer output indicative of a load parameter of the vehicle, and visual display means for producing a visual representation of the computer output, characterised in that said computing apparatus is operable to process said sensor output and a signal representative of the amount of fuel in the vehicle's own fuel tank or tanks so that said computer output is representative of the value which said load parameter of the vehicle would assume if there were a predetermined amount of fuel in said tank or tanks.

By arranging that the aforesaid predetermined amount is the amount of fuel held in the tank or tanks when full, the vehicle operator cannot be misled into overloading the vehicle with its fuel tank or tanks substantially less than full.

In the disclosed embodiment the computer means is adapted to provide axle and gross vehicle weights for full fuel tank conditions. The computer is programmed with data indicative of the maximum fuel tank capacity and can calculate the difference at any time between this maximum and the current amount of fuel being carried. It can then calculate the weight of fuel which could be added to the tank, and adjusts the calculation of the load parameter in accordance with this calculated weight. Thus, whatever amount of fuel there is in the vehicle's fuel tank or tanks, the reading on the visual display means always gives the driver the value for the load parameter (e.g. gross vehicle weight) as if the vehicle's tank or tanks were full, so avoiding later unintentional overloading through refuelling.

Preferably, the at least one load sensor is a strain sensor mounted on a single-wheeled axle of the vehicle, or on a support member of the vehicle at a position which is at a substantially fixed or determinable distance with respect of the load. The significance of these sensor positions will be described later herein.

The strain sensor preferably comprises one or more strain gauges mounted on a strain link which is mountable at the specified position on the vehicle. The computing apparatus is preprogrammed in accordance with predetermined functions which establish the relationship between loads on the vehicle and the affect which is detectable as strain at such specified position or positions for the strain sensor. The computing apparatus is also preprogrammed with such parameters as the vehicle's unladen weight, and is adapted to perform the required calculations using these preset parameters and the determined load value to provide the required load parameters.

Means may be provided for storing the calculated values for these load parameters for record or vehicle log purposes.

In the disclosed embodiments, these different aspects of the invention are all included in a monitoring system providing the advantages which combined to produce practical and reliable operation.

A preferred embodiment of the invention will now be described by way of example with reference to the accompanying drawings.

Figure 1 is a partially schematic diagram illustrating the basic components of a load monitoring system for a road vehicle according to the present invention;

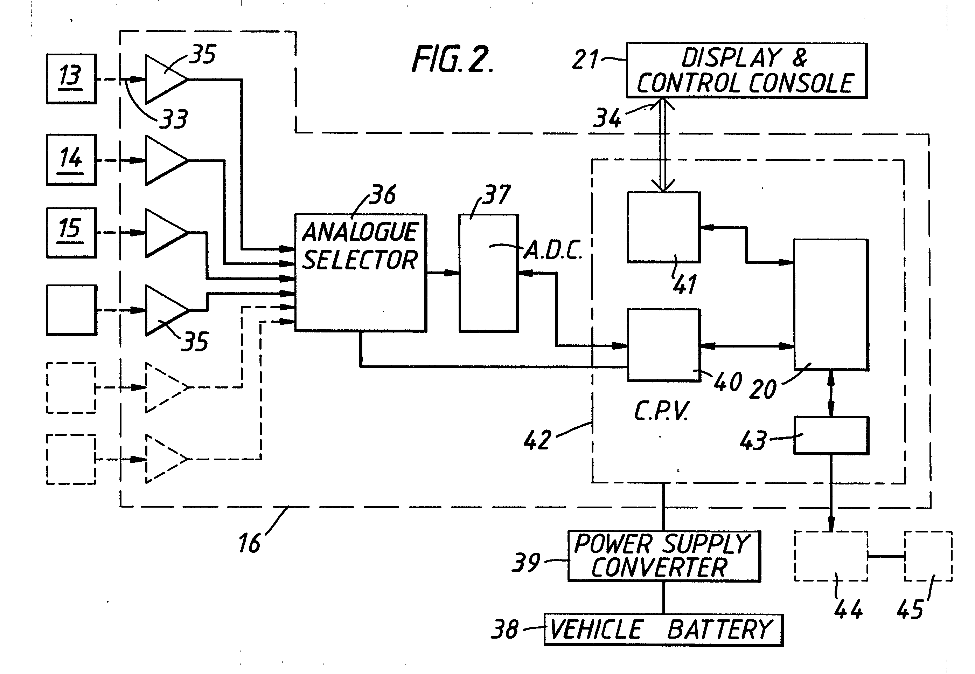

Figure 2 is a block schematic diagram of the CPU of the system shown in Figure 1;

Figure 3 illustrates a strain link and the preferred process of attachment of the strain link to a load bearing member of a vehicle;

Figure 4 is a schematic view of a twin-wheeled axle of a commercial vehicle on a cambered road surface;

Figure 5 is a schematic view of a twin-wheeled axle of a commercial vehicle with the outer wheel of one wheel pair resting on a kerb;

Figure 6 is a schematic illustration of the mounting positions of the components of the Figure 1 system as applied to the tractor unit of an articulated lorry;

Figure 7 is a side elevational view of a tractor unit of an articulated lorry showing an alternative mounting position for the strain link in the figure 1 system;

Figure 8 is a side elevational view of a typical refuse collection vehicle to which the figure 1 system is applied;

Figure 9 is a side elevational view of a typical vehicle fitted with a tipping body and to which the figure 1 system is applied;

Figure 10 is a side elevational view of a typical vehicle fitted with a tank or bulk container and to which the figure 1 system is applied;

Figure 11 is a side elevational view of a typical commercial load vehicle to which the figure 1 system is applied; and

Figures 12a and 12b are schematic illustrations of the change in axle-weight distribution for changing inclination of the vehicle.

Description of the preferred embodiments

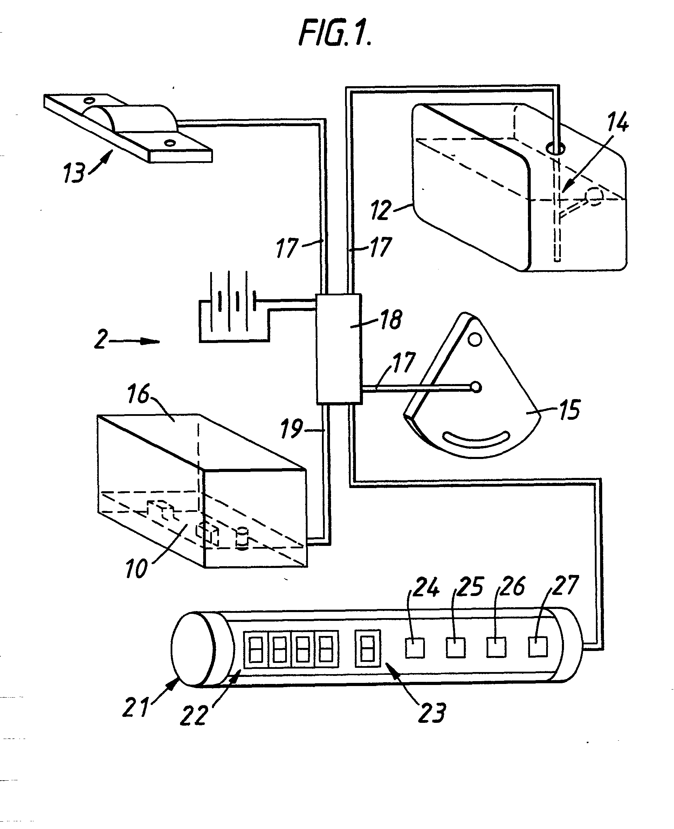

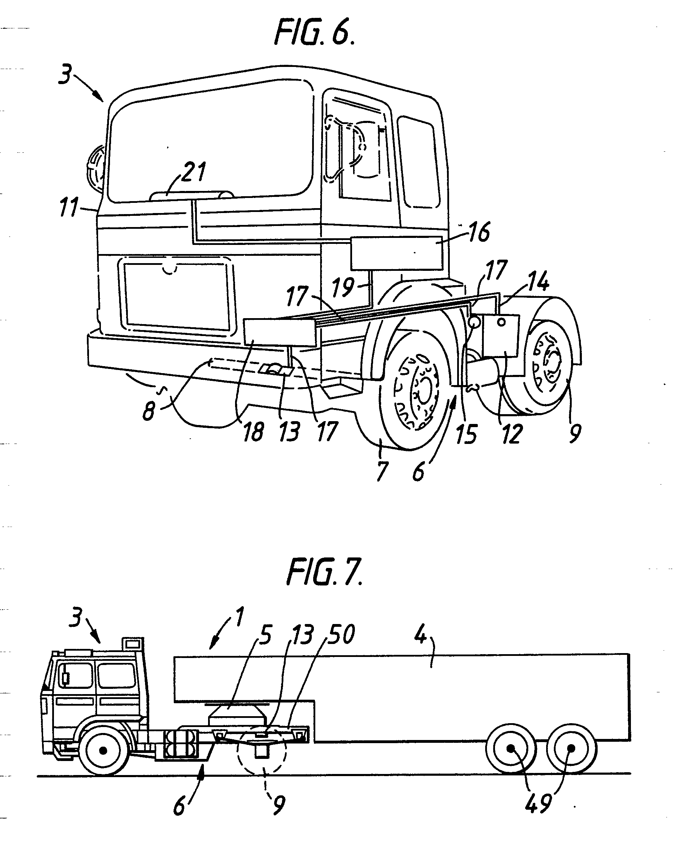

With reference first to figures 1 and 6 a commercial road vehicle 1 to which a system 2 according to the present invention is applicable comprises an articulated lorry having a tractor unit 3 and a trailer 4 attached to the tractor unit 3 by means of the "fifth wheel" 5. (see Fig. 7 for components 4 and 5). The tractor unit 3 has a chassis 6 supported by a front pair of single wheels 7 on a front axle 8 and a rear pair of double wheels 9 on a rear axle. Mounted on the chassis 6 is a driver's cab 11 and a fuel tank 12.

A strain sensor 13 is mounted on the front axle 8 for detecting the strain in the front axle, a fuel sensor 14 is mounted on or in the fuel tank 12 for detecting the amount of fuel in the tank, and an inclinometer 15 is mounted on the chassis for detecting the inclination of the vehicle to the horizontal.

The strain sensor 13, fuel sensor 14 and inclinometer 15 are coupled to a microprocessor control unit 16 located in the drivers cab 11 by way of individual leads 17, a junction box 18 and a common cable 19. The control unit 16 has an electronics board 10 carrying a microprocessor and is coupled to a display and control console 21 positioned suitably within the driver's cab for operation and viewing by the driver. In the embodiment shown, the console 21 has a tube-shaped outer casing with apertures for a four digit numerical display panel 22, a mode indicator 23 and four operating buttons 24, 25, 26, and 27, the functions for which will be discussed later.

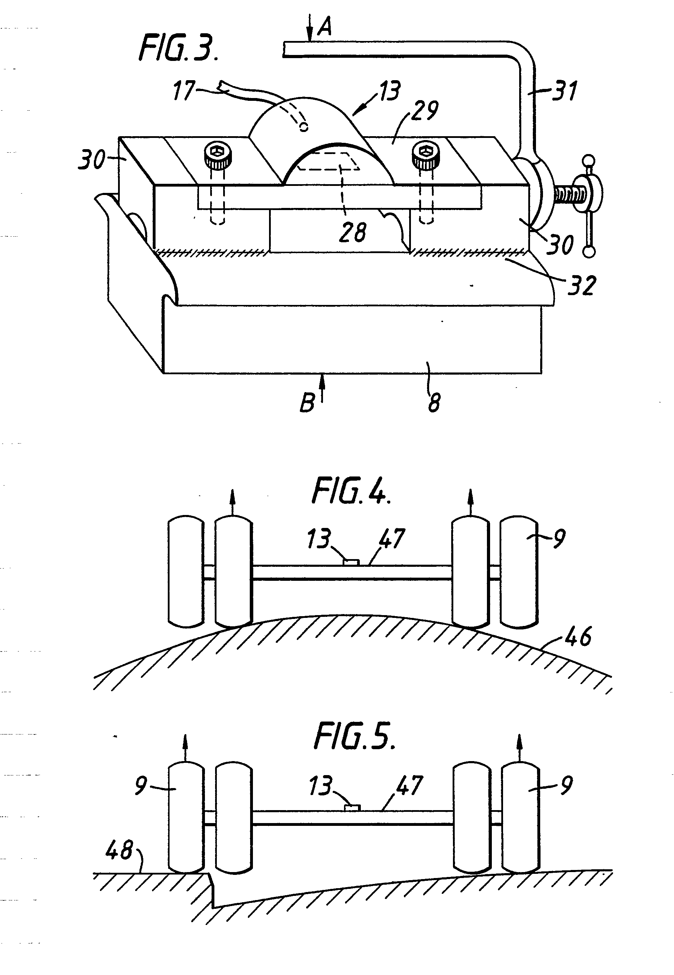

With reference to figure 3, the strain sensor 13 comprises a pair of conventional strain gauges 28 fixed to upper and lower surfaces of a strain link 29 which is secured to the vehicle's front axle 8. In the disclosed embodiment opposite ends of the strain link are securely bolted to respective ones of a pair of support feet 30, and these feet are welded to the axle 8.

In use, strain created in the axle 8 by the affect of the vehicles own weight and the load carried by the vehicle is transmitted through the feet 30 to the link 29 and thereby to the gauges 28. Each gauge will be connected, in a conventional manner, in one arm of a respective bridge network. An adjustable component in another arm of the bridge is used to calibrate the bridge. The provision of the pair of gauges, one on top and one underneath the strain link is to permit compensation for the effects of temperature change etc. It is a characteristic of strain gauges arranged in this way that their output is somewhat unreliable if they are made to operate in both compression and tension. More particularly, fluctuations occur at the zero compression point and in this region the output is unpredictable. For this reason, steps are taken to ensure that the strain gauge 28 always operates under compression in this embodiment. More particularly, the link 29 is mounted on *top* of the axle, which is always under compression, and the link is pre-compressed during the mounting procedure. This procedure, as shown in figure 3 involves first bolting the link 29 to the feet 30, then clamping the resulting unit in G clamp 31 (only partly shown) to apply a given amount of compression, and welding the compressed unit to the top of the axle 8 along longitudinal lines 32 *only* and not along transverse lines (this could interfere significantly with the strain characteristics of the axle 8) while clamping the clamped unit with another G-clamp (not shown) between points A and B as shown. When the two G-clamps are removed, the strain link 29 is still compressed, and in use in the vehicle the variations in the strain in the axle will never cause the compression of the strain gauge to reduce to zero.

The fuel sensor 14 and the inclinometer 15 can each be of a conventional type. The signals from the three sensors are routed via the junction box to the control unit 16 which has a plurality of input lines 33 for receiving these sensor signals. A cable 34 between the control unit and the console 21 comprises a number of lines which carry control signals generated in response to the operation of the buttons 24 to 27, to the microprocessor, and a plurality of output lines from the microprocessor for controlling the display panel 22 and mode indicator 23.

The sensor signals input to the control unit 16 are amplified in respective amplifiers 35, selected by an analogue selector 36 controlled by the microprocessor 20, and digitalized into a form suitable for use in the central processing unit of the microprocessor by an analogue-to-digital converter 37. The memory of the microprocessor contains instructions defining an operating program, and can temporarily store values produced by the calculating operations performed by the CPU during operation of the system. The microprocessor is arranged to be powered from the battery 38 of the vehicle via a suitable voltage converter 39. I/O units 40 receive inputs to and supply outputs from the microprocessor assembly 42. A serial output unit 43 can output information provided by the microprocessor 20 from the control unit 16, for example to a log recording device 44.

The microprocessor 20 is programmed to process the signals from the strain link, inclinometer and fuel gauge, and to drive the digital display 22 to indicate the value of a parameter determined by the operation of the buttons 24 to 27, these buttons being associated with different modes of the system. More particularly, button 24 is a "reset" button, the function of which will be described later. Button 25 is labelled "weight" and can be operated to cause the calculated load parameters to be displayed. Button 26 is a calibration button which can be operated when certain calibration functions, to be described later, are required. Button 27 is a "time-set" button which is operable to set the time indicated by the digital display in a clock mode of the system. It should be mentioned that the microprocessor also includes a continually running clock, and the display is so controlled that it will show time, unless the reset, weight or calibration modes are selected.

The mode indicator 23 is controlled to display a character indicating the present display mode. When placed into the "weight" indicating mode, the system automatically runs through a cycle of load parameter displays. For example, the sequence of display may be: front axle weight; rear (or drive) axle weight; total tractor weight; fifth-wheel load, each parameter being identified by a given digit display by the mode indicator. In the embodiment, the microprocessor 20 is preprogrammed with the legal requirements applicable to the particular vehicle concerned, and responds to any particular load parameter exceeding the relevant threshold by interrupting the sequence and providing a visual warning of the overload condition. In this embodiment, the warning comprises the repeated flashing of the mode display digit for the offending load parameter. When this occurs, the sequence may be resumed by a further operation of the weight button 25.

The "reset" button 24 allows for the resetting of the unladen weight of the vehicle. For example, although the microprocessor is programmed with a value for the unladen weight which includes a statistical average weight of a commercial vehicle driver, greater precision for this factor for the particular driver concerned can be provided by this "reset" facility. When the driver operates the reset button when seated in the cab, the system is reset so as to identify the current calculated vehicle weight as the new unladen weight.

The system provides two calibration functions which can be selected by operation of the calibration button 26, followed by another one of the function buttons. The first of these functions is an initialization operation which is carried out when the system is first installed in the vehicle for the purposes of calibration of the various different sensors. The program in the microprocessor assumes that the outputs of the sensors will have certain predetermined values under given load and vehicle conditions, and this initialization procedure is necessary to establish this calibration of the sensors. In this first calibration mode, the "weight" button 25 is operated to select the different sensors in a predetermined sequence, the selected sensor being identified by the display of the mode indicator 23. For each selected sensor, a zero condition corresponding to a predetermined load or vehicle condition is established. Adjustments are made to set both the sensor output, and the amplified sensor output to zero in this predetermined condition. A predetermined non-zero condition is then applied, and the relevant amplification factor is adjusted to provide the required predetermined output. This procedure is repeated for each sensor in turn.

In a second calibration procedure, the system can be made to perform a self-checking routine. Again, the vehicle is placed under standard conditions, e.g. on level ground with no load, and the calibration button 26 is operated, followed by a predetermined sequence of the other buttons. In this mode, the system reads the sensor outputs in a predetermined sequence and compares them with predetermined reference values stored in the microprocessor memory. If any of the measured values is beyond a predetermined tolerance with respect to the respective reference value, the sensor reading is repeatedly flashed on the numerical display 22 to give a visual warning. The mode indicator 23 identifies the particular sensor concerned. The relevant sensor and/or amplifier adjustment can then be made to bring the system back into calibration.

The microprocessor may also be arranged to provide a burglar alarm function. The system can be put into the alarm mode by a predetermined sequence of operation of the function buttons. The system is thereafter inactive for a short period which is sufficient to enable the driver to leave the cab. Thereafter, the system is responsive to any sudden change in the output of the load sensor by an amount exceeding a predetermined limit to operate an audible and/or visual alarm. For example, the vehicle's horn may be operated and headlights may be flashed. A predetermined delay between detection of the load increase and operation of alarm is provided in order to enable the driver re-entering the cab to deactivate the alarm system by inputting a predetermined code comprising the original, or a different, sequence of operation of the function buttons. When active, the system may also respond to sudden changes in the supply voltage from the battery, as would be caused by the automatic switching on of an internal light in the trailer upon unauthorised opening of the trailers rear door.

The microprocessor may also be arranged to operate in conjunction with the distance measuring element of a Tachograph 45 which is a time distance measurement and recording device. The system can be operated to provide the driver with information as to his compliance with the legal requirements of maximum driving hours in a predetermined period, and this information can be retrieved in combination with the weight variables to provide a record for management purposes of time, distance, fuel, weight and unauthorised activity.

The microprocessor is adapted to compensate for the current fuel level in the vehicle tank or tanks and to drive the numerical display 22 to provide a visual output corresponding to the full-tank condition. It will be appreciated that commercial vehicles have large-capacity fuel tanks and that accordingly if the vehicle is loaded up to the legal limit with the fuel tank significantly less. than full, subsequent refuelling will put the vehicle into an illegal load condition. Accordingly, by compensating for the fuel level, the present system avoids this problem. To provide this function, the microprocessor 20 is programmed in accordance with the known relationship between amount of fuel in the vehicle tank 12 and the affect which the load corresponding to that amount of fuel has upon the load sensor 13. The microprocessor can calculate the difference between the maximum capacity of the fuel tank and the current fuel level, the corresponding weight of the fuel which could be added to the fuel tank, and an appropriate compensation factor to be applied to the sensor output.

Accordingly, the load parameters displayed on the numerical displayer 22 always correspond to the full-tank condition of the vehicle.

It will also be appreciated that the output of the load sensor or sensors for a given vehicle loading is affected significantly by the inclination of the vehicle to the horizontal, as previously described with reference to Figures 12a and 12b. The legal limits for the load parameters are set for a horizontal disposition of the vehicle, but it frequently happens that loading-up of the vehicle takes place in an inclined position of the vehicle. The microprocessor in the embodiment of the present invention is programmed to compensate for any inclination of the vehicle to the horizontal so that the readings provided on the numerical display correspond to the values which the load parameters would assume in the horizontal position of the vehicle. To provide this function, the microprocessor is programmed in accordance with the known geometrical configuration of the vehicle and the predeterminable functions relating the vehicle inclination to the change in the affect of the vehicle weight and the load on the load sensor or sensors.

On some commercial vehicles there is both a main fuel tank and an auxiliary fuel tank. In a parallel fuel delivery system, these two tanks are connected in parallel so that their respective fuel levers are always the same. In this case, a fuel sensor output from one of the tanks provides the microprocessor with sufficient information for it to establish the current total fuel level and the compensation to be applied. However, in another known arrangement, the auxiliary fuel tank is carried on top of the main fuel tank, its contents being emptied into the main fuel tank when the fuel level in the latter drops to a predetermined level. In this case, the low fuel condition of the main tank is signalled to the driver, who then operates a switch to open a valve which dumps the fuel from the auxiliary tank into the main tank. To provide sufficient information to the microprocessor 20 in such an arrangement, the fuel sensor 14 senses the fuel level in the main tank, and a simple electronic detector detects whether the auxiliary tank is full or empty. The microprocessor is programmed with the fuel capacity of the auxiliary tank and can respond to the output of the electronic sensor to determine whether or not this amount of fuel is present in addition to the amount of fuel indicated by the fuel sensor output.

Having thus described the load monitoring system itself, its application to various different forms of commercial vehicle will now be discussed. However, before describing these applications individually, reference will be made to figures 4 and 5 which illustrate certain problems which would be encountered if a load sensor were to be mounted on a twin-wheeled vehicle axle to detect that axle weight.

It has in the past been proposed to fix load sensors to various points on a longitudinal load-bearing chassis component, the magnitude of an applied load being calculated automatically from the load sensor outputs. However, such arrangements are impracticable since they take no account of the distribution of the load on the vehicle. More particularly, the sensor may provide the same outputs for two different load distributions, one of which creates axle loadings which are within the level limit, and the other of which creates illegal axle weights in one or more axles. It has been proposed that this problem should be overcome by positioning one or more load sensors on each of the vehicles axles, so as to provide direct measurement of the axle weights. However, quite apart from the serious problem of excessive cost of such a multi-sensor system (the sensors being particularly expensive components), there are additional problems associated with the use of strain gauges on the twin-wheeled axle or axles of a commercial road vehicle, these problems resulting in inaccuracies in the measurement of the axle weight for such a twin-wheeled axle. Figure 4, illustrates one situation in which these inaccuracies would arise. Here, the vehicle is parked on a road surface 46 having a large camber, and it will be seen that this results in the load which is applied through the tyres to the road surface being unevenly distributed amongst the four wheels 9. More particularly, in the extreme situation illustrated, the inner wheels take the whole of the load, and accordingly the leverage applied to the axle 47 at an intermediate position where a sensor 13 would be positioned is different from the leverage which would be applied if the vehicle were supported on a perfectly flat surface. Figure 5 illustrates another situation producing inaccurate sensing of twin-wheeled axle weight. Here, the vehicle has been parked with the left outer wheel resting on a kerb 48, and it can readily be seen that the leverage applied at the sensor 13 would be greater than in the case when the vehicle is supported on a flat surface because all of the weight applied by the left pair of wheels is imposed through the outermost wheel.

Accordingly, we propose that the ideal position for the sensor is centrally on a single-wheeled axle, such an arrangement being free from the inaccuracies described above, and that there should be no sensors on any twin-wheeled axle.

Figures 6 and 7 illustrate the use of the described monitoring system on an articulated lorry. Certain particular factors should be mentioned about this type of vehicle. Firstly, the front end of the trailer 4 is attached to the rear of the tractor unit 3 through a device which is known as the "fifth wheel" 5 which, as can be seen from figure 7, is located close to but forwardly of the rear drive wheels 9 of the tractor unit 3. The trailer 4 normally has two or three pairs of rear twin-wheeled axles 49.

The load due to the trailer unit 4 and the pay load is applied to the tractor unit 3 at a fixed position i.e. at the fifth wheel. Accordingly, in this particular case, for the purpose of calculation of the effect on the axle weights of the tractor unit of the trailer, the sensors may be mounted elsewhere than on the front, single-wheeled axle, and in particular upon chassis components 50 directly over the rear drive wheels, as illustrated in Figure 7. If this alternative load sensing position is employed, it should be noted that two sensors will be required, one on each side in order to allow for lateral imbalance, for example where the lorry is laterally tilted.

Another point in relation articulated vehicles is that the critical load parameters are the axle weights on the tractor unit, the legal requirements relating to the trailer axles being significantly more flexible. In particular, a large part of the limit for the axle weights of the tractor unit is already accounted for by the weight of the tractor unit itself, and therefore the affect of the applied load from the trailer is a critical factor.

Let us assume that there is a single strain link mounted in the ideal position, i.e. centrally on the front axle. The geometry of the vehicle is, of course, known, and the microprocessor is preprogrammed in accordance with the known relationship between varying loads applied to the fifth wheel and the affects they have upon the front axle sensor. Accordingly, when the driver selects the weighing mode by pressing the "weight" button 25, the microprocessor computes from the strain link, inclimometer and fuel tank sensors the load applied to the fifth wheel. To do this, the microprocessor processes the output from the sensor and compensates for inclination to calculate the load applied to the fifth wheel. It then compensates for the level of the fuel in the manner described earlier (taking account also of inclination) and calculates the total load being applied through the axles of the tractor unit, the unladen weight being, of course, a known parameter. Since the load sensor 13 provides an output directly representative of the front axle weight, the microprocessor can by subtraction calculate the axle weight of the rear drive axle.

Although in this arrangement the system cannot calculate the axle weights for the rear axles 49 of the trailer these are in practice much less critical and rarely if ever, present a problem of potential infringement of legal limits.

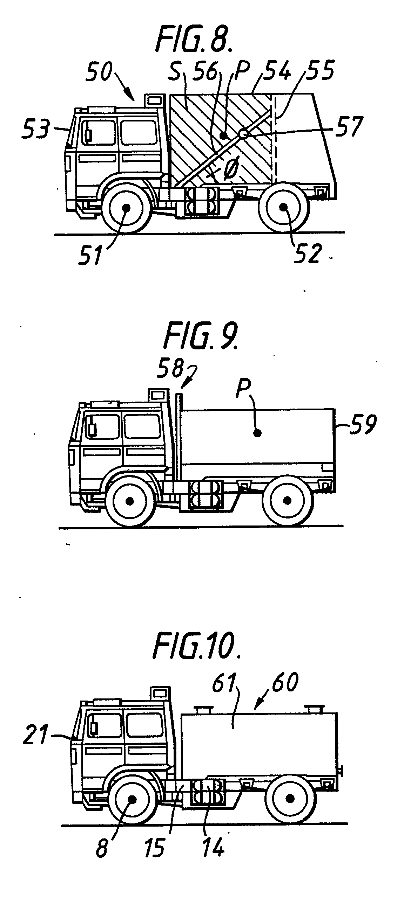

Next, with reference to figure 8, the application of the described load monitoring system to a refuse collection vehicle will now be described. Such a vehicle 50 has a chassis, a front single-wheel axle 51 and a rear twin-wheeled axle 52, a driver's cab 53 and a refuse container 54 mounted on the chassis. A compression plate 55 is mounted in the container, and a hydraulic ram 36 attached at one end to the chassis and at the other end to the compression plate 55 is intermittently operated to compress the refuse introduced into the container toward the front end of the container. As can be seen from the figure, the inclination φ of the ram relative to the vehicle chassis provides an indication of the position of the compression plate, and this latter position at the end of a compression cycle is itself indicative of the position of the load, this load having been compressed into a substantially cuboid space S defined between the fixed front end of the container and the moving compression plate. On the assumption that the density of the refuse material compressed within this space S is substantially uniform, the position of the centre of gravity P of the load can readily be calculated.

In this embodiment, in addition to the main chassis inclinometer, there is provided a further inclinometer 57 mounted on the ram 56, and the output of this further inclinometer 57 is coupled to the microprocessor 20 of the monitoring system.

The microprocessor is programmed so that in the weighing mode it calculates from the output of the further inclinometer 57 the position of the centre of gravity P of the load. From the output of the strain link mounted on the front axle, the microprocessor can then calculate the magnitude of the load acting at the determined centre of gravity which will have the measured effect at the front axle. This calculated load can then be added to the known unladen weight of the vehicle to produce the vehicle gross weight. The front axle weight is known from the load sensor output, and the rear axle weight can be simply calculated by subtraction. Accordingly, all the required load parameters can readily be determined and displayed sequentially on the numerical display 22 of the console 21.

The application of the system to a vehicle provided with a tipping mechanism for a fluid load is illustrated in figure 9. For a vehicle 58 of this type, the microprocessor will be programmed on the assumption that the centre of gravity P of the load in the container 59 will be at a position which is substantially central longitudinally of the load container. Again, the load sensor is mounted on the front axle, and the microprocessor is operable, in the weighing mode of the system, to calculate the magnitude of the load acting at the assumed centre of gravity position which creates the measured effect at the front axle. This load is added to the known unladen weight of the vehicle to produce the gross vehicle weight, and the front axle weight, known from the output of the sensor, is subtracted from the gross vehicle weight to produce the rear axle weight.

With reference to figure 10, the application of the system to a vehicle 60 fitted with a closed tank 61 for a liquid or bulk load is illustrated. If the tank has a single compartment, the centre of gravity is assumed to be at a longitudinal position which is substantially central of the tank. If there is more than one compartment, the centre of gravity can be calculated from the known geometry of the tank, and from outputs from individual sensors indicating the respective levels of the fluid load in these compartments. Again, the load sensor 13 is in the form of a strain link mounted on the front axle 8, and the microprocessor is operable, in the weighing mode, to calculate from the load sensor output the magnitude of the load acting at the assumed or calculated centre of gravity which produced the measured effect at the front axle. The further calculations performed by the microprocessor comprise the addition of the calculated load to the unladen weight of the vehicle, the calculation directly from the sensor output of the front axle weight, and the calculation, by subtraction of the rear axle weight.

The application of a load monitoring system according to the invention to a vehicle 62 fitted with a load support 63 mounted on the chassis for carrying a distributed load 64, is illustrated in figure 11. In practice, it is found that the problems with this type of vehicle are less serious than with the previously described vehicles, and primarily result in overloading of the front axle. The load sensor is in the form of a strain link mounted on the front axle 8 and the microprocessor is operable, in the weighing mode, to calculate from the sensor output only the front axle weight.

It will be understood from the foregoing description that in its different aspects the invention provides significant advantages. Thus, by positioning a load sensor on a single-wheeled axle, extremely accurate and reliable readings can be obtained for various load parameters, depending upon the nature of the vehicle, and the need to provide a large number of sensors around the vehicle is avoided, so giving cost benefits. The provision of a chassis inclinometer permits measured parameters to be compensated and resolved to a horizontal vehicle orientation so improving the accuracy of load display, and the programming of the microprocessor to compensate for fuel level provides a further safeguard against overloading.

The described system has numerous other novel features which the skilled man will appreciate give rise to advantages. These are each independent aspects of the invention to be covered by the present application, irrespective of whether or not they are included within the scope of the following claims.

**Claims**

1. A load monitoring system for a road vehicle (3, 4) comprising at least one load sensor (13) for mounting on the vehicle for providing a sensor output which varies in accordance with the load carried by the vehicle, a computing apparatus (16) which is operable to process the or each output from said at least one load sensor (13) and to provide a computer output indicative of a load parameter of the vehicle (3, 4), and visual display means (21) for producing a visual representation of the computer output, characterised in that there is also provided an inclination sensor (15) for mounting on the vehicle for providing a sensor output indicative of the inclination of the vehicle to a datum, e.g. the horizontal, said computing apparatus (16) being operable to process the sensor outputs both from said load and inclination sensors so that said computer output is representative of the value which said load parameter of the vehicle would assume when said inclination to said datum is zero.

2. A system according to claim 1, characterised in that said computing apparatus is operable also to process a signal representative of the amount of fuel in the vehicle's own fuel tank or tanks (12) so that said computer output is representative of the value which said load parameter of the vehicle would assume if there were a predetermined amount of fuel in said tank or tanks.

3. A load monitoring system for a road vehicle (3, 4) comprising at least one load sensor (13) for mounting on the vehicle for providing a sensor output which varies in accordance with the load carried by the vehicle, a computing apparatus (16) which is operable to process the or each output from said at least one load sensor (13) and to provide a computer output indicative of a load parameter of the vehicle (3, 4), and visual display means (21) for producing a visual representation of the computer output, characterised in that said computer apparatus (16) is operable to process said sensor output and a signal representative of the amount of fuel in the vehicle's own fuel tank or tanks (12) so that said computer output is representative of the value which said load parameter of the vehicle would assume if there were a predetermined amount of fuel in said tank or tanks (12).

4. A system according to claim 2 or claim 3, characterised in that said predetermined amount of fuel is the amount of fuel which said tank or tanks hold when full.

5. A system according to any preceding claim wherein said at least one load sensor is a strain sensor mounted on a single-wheeled axle (8) of the vehicle (3, 4), the system having no said strain sensors (13) providing outputs processed by the computing apparatus and mounted on a twin-wheeled axle (47) of the vehicle.

6. A system according to any of claims 1 to 4 wherein said at least one load sensor is a strain sensor mounted on a support member of the vehicle at a position which is at a substantially fixed or determinable distance with respect to the load.

7. A system according to any preceding claim wherein said computing apparatus (16) is programmed with predetermined vehicle parameters to enable it to use the at least one load sensor output to calculate at least one said load parameter relating to a part of the vehicle remote from the position of said sensor.

8. A system according to claim 7 wherein said computing apparatus (16) is programmed to calculate from the known, or determined position of a load applied to the vehicle, from the at least one load sensor output, and from said predetermined vehicle parameters the magnitude of said load which creates said at least one load sensor output.

9. A system according to claim 8, wherein said computing apparatus (16) is operable to store a value for the unladen weight of the vehicle and to determine from the calculated load and the unladen weight the gross vehicle weight for that vehicle.

10. A system according to any preceding claim wherein said computing apparatus (16) is operable to store a threshold value for said load parameter and to activate a warning if the value for the load parameter exceeds said threshold.

11. A system according to any of claims 7 to 10 wherein said computing apparatus (16) is operable to determine the axle weights for a plurality of axles of the vehicle in accordance with said at least one load sensor output.

12. A system according to any preceding claim wherein said computing apparatus (16) is operable to computer values for a plurality of different said load parameters and to control said visual display means (21) to display said values for said parameters in a predetermined sequence.

13. A system according to any preceding claim wherein said visual display means (21) is operable also in a time indicating mode to provide a clock display.

14. A system according to any preceding claim, further including means which is operable when active to provide an alarm in response to a change in the sensor output exceeding a predetermined level.

**Patentansprüche**

1. Lastüberwachungssystem für ein Straßenfahrzeug (3, 4), umfassend mindestens einen am Fahrzeug zu montierenden Lastsensor (13) zur Erzeugung eines Sensorausgangs, der sich entsprechend der vom Fahrzeug getragenen Last ändert, ein Rechengerät (16) zur Verarbeitung des oder jedes Ausgangs des mindestens einen Lastsensors (13) und zur Erzeugung eines einen Lastparameter des Fahrzeugs (3, 4) angebenden Rechenausgangs, und eine Sichtanzeige (21) zur Erzeugung einer sichtbaren Darstellung des Rechenausgangs, dadurch gekennzeichnet, daß außerdem ein an dem Fahrzeug zu montierender Neigungssensor (15) zur Erzeugung eines die Neigung des Fahrzeugs zu einer Bezugsgröße, z.B. der Horizontalen, angebenden Sensorausgangs vorgesehen ist, wobei das Rechengerät (16) zur Verarbeitung der Sensorausgänge sowohl des Last- als auch des Neigungssensors eingerichtet ist, so daß der Rechenausgang denjenigen Wert repräsentiert, den der Lastparameter des Fahrzeugs annehmen würde, wenn die Neigung zur Bezugsgröße Null wäre.

2. System nach Anspruch 1, dadurch gekennzeichnet, daß das Rechengerät auch zur Verarbeitung eines die Treibstoffmenge in dem oder dem fahrzeugeigenen Tanks (12) angebenden Signals eingerichtet ist, so daß der Rechenausgang denjenigen Wert repräsentiert, den der Lastparameter des Fahrzeugs annehmen würde, wenn eine vorgegebene Treibstoffmenge in dem oder den Tanks vorhanden wäre.

3. Lastüberwachungssystem für ein Straßenfahrzeug (3, 4), umfassend mindestens einen am Fahrzeug zu montierenden Lastsensor (13) zur Erzeugung eines Sensorausgangs, der sich entsprechend der vom Fahrzeug getragenen Last ändert, ein Rechengerät (16) zur Verarbeitung des oder jedes Ausgangs des mindestens einen Lastsensors (13) und zur Erzeugung eines einen Lastparameter des Fahrzeugs (3, 4) angebenden Rechenausgangs, und eine Sichtanzeige (21) zur Erzeugung einer sichtbaren Darstellung des Rechenausgangs, dadurch gekennzeichnet, daß das Rechengerät (16) zur Verarbeitung des Sensorausgangs und eines die Brennstoffmenge in dem oder den fahrzeugeigenen Tanks (12) angebenden Signals eingerichtet ist, so daß der Rechenausgang denjenigen Wert repräsentiert, den der Lastparameter des Fahrzeugs annehmen würde, wenn eine vorgegebene Treibstoffmenge in dem oder den Tanks vorhanden wäre.

4. System nach Anspruch 2 oder 3, dadurch gekennzeichnet, daß die vorgegebene Treibstoffmenge diejenige Treibstoffmenge ist, die sich in dem bzw. den Tanks befindet, wenn diese(r) voll ist (sind).

5. System nach einem der vorhergehenden Ansprüche, wobei der mindestens eine Lastsensor ein an einer Einzelradachse (8) des Fahrzeugs (3, 4) angebrachter Dehnungssensor ist, wobei das System keine Dehnungssensoren (13) aufweist, die von dem Rechengerät verarbeitete Ausgänge liefern und an einer Doppelradachse (47) des Fahrzeugs angebracht sind.

6. System nach einem der Ansprüche 1 bis 4, wobei der mindestens eine Lastsensor ein Dehnungssensor ist, der auf einem Stützglied des Fahrzeugs an einer Position angebracht ist, die sich in einem im wesentlichen festen oder bestimmbaren Abstand von der Last befindet.

7. System nach einem der vorhergehenden Ansprüche, wobei das Rechengerät (16), mit vorgegebenen Fahrzeugparametern programmiert ist, um den mindestens einen Lastsensorausgang zur Berechnung mindestens eines Lastparameters, der sich auf einen von der Position des Sensors entfernten Teil des Fahrzeugs bezieht, verwenden zu können.

8. System nach Anspruch 7, wobei das Rechengerät (16) so programmiert ist, daß es aus der bekannten oder bestimmten Position einer auf das Fahrzeug wirkenden Last, dem mindestens einen Lastsensorausgang und den vorbestimmten Fahrzeugparametern die Größe der Last berechnet, die den mindestens einen Lastsensorausgang erzeugt.

9. System nach Anspruch 8, wobei das Rechengerät (16) zur Speicherung eines Wertes für das Leergewicht des Fahrzeugs und zur Bestimmung des Fahrzeugbruttogewichts aus der berechneten Last und dem Leergewicht des Fahrzeugs eingerichtet ist.

10. System nach einem der vorhergehenden Ansprüche, wobei das Rechengerät (16) zur Speicherung eines Schwellenwertes für den Lastparameter und zur Aktivierung einer Warnung eingerichtet ist, wenn der Wert des Lastparameters den Schwellenwert überschreitet.

11. System nach einem der Ansprüche 7 bis 10, wobei das Rechengerät (16) zur Bestimmung der Achsgewichte für mehrere Fahrzeugachsen entsprechend dem mindestens einen Lastsensorausgang eingerichtete ist.

12. System nach einem der vorhergehenden Ansprüche, wobei das Rechengerät (16) zur Berechnung von Werten für mehrere unterschiedliche Lastparameter und zur Steuerung der Sichtanzeige (21) zur Darstellung der Werte der Parameter in einer vorgegebenen Reihenfolge eingerichtet ist.

13. System nach einem der vorhergehenden Ansprüche, wobei die Sichtanzeige (21) auch in einem Zeitanzeige-Modus zur Darstellung einer Uhrzeit eingerichtet ist.

14. System nach einem der vorhergehenden Ansprüche, ferner umfassend eine Einrichtung, die im aktiven Zustand zur Erzeugung eines Alarms eingerichtet ist, wenn eine eine Änderung des Sensorausgangs einen vorgegebenen Wert überschreitet.

## Revendications

1. Système de contrôle de charge pour un véhicule routier (3, 4), comportant au moins un détecteur de charge (13) destiné à être monté sur le véhicule en vue de fournir un signal de sortie de détecteur qui varie en fonction de la charge transportée par le véhicule, un appareil de calcul (16) apte à opérer pour traiter chaque signal de sortie provenant dudit détecteur de charge (13) et pour fournir une sortie d'ordinateur indicative d'un paramètre de charge du véhicule (3, 4), et des moyens d'affichage visuel (21) destinés à produire une repésentation visuelle de la sortie d'ordinateur, caractérisé en ce qu'il est également prévu un détecteur d'inclinaison (15) destiné à être monté sur le véhicule pour fournir un signal de sortie de détecteur indicatif de l'inclinaison du véhicule par rapport à une donnée de référence, par exemple l'horizontale, ledit appareil de calcul (16) étant apte à opérer pour traiter les signaux de sortie provenant desdits deux détecteurs de charge et d'inclinaison, de façon que ladite sortie d'ordinateur soit représentative de la valeur qu'adopterait ledit paramètre de charge du véhicule, si ladite inclinaison par rapport à ladite donnée de référence était égale à zéro.

2. Système selon la revendication 1, caractérisé en ce que ledit appareil de calcul est également apte à opérer pour traiter un signal représentatif de la quantité de carburant contenue dans chaque réservoir de carburant (12) propre au véhicule, de façon que ladite sortie d'ordinateur soit représentative de la valeur qu'adopterait ledit paramètre de charge du véhicule, s'il y avait une quantité de carburant prédéterminée dans ledit réservoir.

3. Système de contrôle de charge pour un véhicule routier (3, 4), comportant au moins un détecteur de charge (13) destiné à être monté sur le véhicule en vue de fournir un signal de sortie de détecteur qui varie en fonction de la charge transportée par le véhicule, un appareil de calcul (16) apte à opérer pour traiter chaque signal de sortie provenant dudit détecteur de charge (13) et pour fournir une sortie d'ordinateur indicative d'un paramètre de charge du véhicule (3, 4), et des moyens d'affichage visuel (21) destinés à produire une représentation visuelle de la sortie d'ordinateur, caractérisé en ce que ledit appareil de calcul (16) est apte à opérer pour traiter ledit signal de sortie de détecteur et un signal représentatif de la quantité de carburant contenue dans chaque réservoir de carburant (12) proper au véhicule, de façon que ladite sortie d'ordinateur soit représentative de la valeur qu'adopterait ledit paramètre de charge du véhicule, s'il y avait une quantité de carburant prédéterminée dans ledit réservoir (12).

4. Système selon la revendication 2 ou la revendication 3, carctérisé en ce que ladite quantité de carburant prédéterminée correspond à la quantité de carburant que contient chaque réservoir, lorsqu'il est plein.

5. Système selon l'une quelconque des revendications précédentes, dans lequel ledit détecteur de charge est un détecteur de contrainte monté sur un essieu à roues simples (8) du véhicule (3, 4), le système ne comportant pas de détecteur de contrainte (13) fournissant des signaux de sortie traités par l'appareil de calcul et monté sur un essieu à roues doubles (47) du véhicule.

6. Système selon l'une quelconque des revendications 1 à 4, dans lequel ledit détecteur de charge est un détecteur de contrainte monté sur un organe de support du véhicule, au niveau d'un emplacement situé à une distance sensiblement fixe, ou apte à être déterminée, par rapport à la charge.

7. Système selon l'une quelconque des revendications précédentes, dans lequel ledit appareil de calcul (16) est programmè à l'aide de paramètres de véhicule prédéterminés, pour lui permettre d'utiliser chaque signal de sortie de détecteur de charge en vue de calculer au moins ledit paramètre de charge relatif à une partie du véhicule distante de l'emplacement dudit détecteur.

8. Système selon la revendication 7, dans lequel ledit appareil de calcul (16) est programmé pour, à partir de l'emplacement connu ou déterminé d'une charge appliquée au véhicule, de chaque signal de sortie de détecteur de charge, et desdits paramètres de véhicule prédéterminés, calculer l'amplitude de ladite charge qui engendre ledit signal de sortie de détecteur de charge.

9. Système selon la revendication 8, dans lequel ledit appareil de calcul (16) est apte à opérer pour stocker une valeur correspondant au poids à vide du véhicule et pour, à partir de la charge calculée et du poids à vide, déterminer le poids brut correspondant à ce véhicule.

10. Système selon l'une quelconque des revendications précédentes, dans lequel ledit appareil de calcul (16) est apte à opérer pour stocker une valeur de seuil correspondant audit paramètre de charge et pour déclencher un signal avertisseur, si la valeur correspondant au paramètre de charge dépasse ledit seuil.

11. Système selon l'une quelconque des revendications 7 à 10, dans lequel ledit appareil de calcul (16) est apte à opérer pour déterminer les poids à l'essieu correspondant à plusieurs essieux du véhicule, en fonction dudit signal de sortie de détecteur de charge.

12. Système selon l'une quelconque des revendications précédentes, dans lequel ledit appareil de calcul (16) est apte à opérer pour calculer des valeurs correspondant à plusieurs paramètres de charge différents et pour commander lesdits moyens d'affichage visuel (21), en vue d'afficher lesdites valeurs correspondant auxdits paramètres, dans un ordre prédéterminé.

13. Système selon l'une quelconque des revendications précédentes, dans lequel lesdits moyens d'affichage visuel (21) sont également aptes à opérer pour, dans un mode d'indication de temps, fournir un affichage d'horloge.

14. Système selon l'une quelconque des revendications précédentes, comportant en outre des moyens aptes, lorsqu'ils sont actifs, à opérer pour fournir une alarme en réponse à une variation du signal de sortie de détecteur, supérieure à un niveau prédéterminé.

# FIG.1.

FIG.2.

*13*

*14*

*15*

*35*

*33*

*35*

*36* ANALOGUE SELECTOR

*37* A.D.C.

*16*

*21* DISPLAY & CONTROL CONSOLE

*34*

*41*

*40* C.P.V.

*42*

*43*

*20*

*39* POWER SUPPLY CONVERTER

*38* VEHICLE BATTERY

*44* *45*

EP 0 218 466 B1

FIG.3.

17    13    29

30    28    30

31

A

B    8

32

FIG.4.

13    47    9

46

FIG.5.

9    13    47    9

48

## FIG.6.

## FIG.7.

4

## FIG.8.

## FIG.9.

## FIG.10.

## FIG.11.

## FIG.12a.

## FIG.12b.